# FASCICULE DE BREVET EUROPEEN

(11) **EP 3 083 273 B1**
(45) Date de publication et mention de la délivrance du brevet: **11.07.2018**
(21) Numéro de dépôt: 14814844.8
(22) Date de dépôt: 16.12.2014
(51) Int. Cl.: B60C 1/00, C08L 9/06

(54) **PNEUMATIQUE POUR VELOCIPEDE**
FAHRRADREIFEN
TIRE FOR BICYCLE

(30) Priorité: 18.12.2013 FR 1362857
(43) Date de publication de la demande: 26.10.2016
(73) Titulaire: Compagnie Générale des Etablissements Michelin, 63000 Clermont-Ferrand (FR)
(72) Inventeur: TOURENNE, Annabel, F-63040 Clermont-Ferrand Cedex 9 (FR); GIBERT, François-Xavier, F-63040 Clermont-Ferrand Cedex 9 (FR)
(74) Mandataire: Cohen, Sylvia
(86) Numéro de dépôt international: PCT/EP2014/078051
(87) Numéro de publication internationale: WO 2015/091541

(56) Documents cités:
- US-B1- 7 259 205

## Description

L'invention concerne un pneumatique pour vélocipèdes, en particulier pour vélos tout terrain (VTT).

En effet, il existe différents types de vélocipèdes, vélo de route (éventuellement à assistance électrique), vélos tout terrain, notamment destiné à la pratique de sport amateur ou de compétiteurs de discipline appelée « Downhill » essentiellement de descente, « enduro » avec davantage de montées que de descentes sur des parcours ou encore « Cross-Country ».

La problématique des pneumatiques pour VTT et en particulier pour la pratique d'enduro et de Downhill nécessite un compromis de propriétés d'adhérence et de comportement très important sans impacter les propriétés d'usure. En effet, l'adhérence et le comportement sont essentiels pour permettre au pilote de contrôler son vélo et sa trajectoire, ainsi par exemple une trop grande rigidité ferait glisser les pneumatiques sur des obstacles tels que des cailloux, voire rebondir si l'hystérèse est trop faible, et faire perdre au pilote la maîtrise de son vélo.

Ainsi il est connu d'utiliser dans la matrice élastomérique de tels pneumatiques, éventuellement en coupage avec du caoutchouc naturel, des copolymères de butadiène-styrène (SBR) ayant une Tg élevée (supérieure ou égale à -65°C) et des plastifiants cependant la teneur en plastifiants est limité afin de préserver les propriétés d'usure des pneumatiques même si pour ce type de pratique on ne cherchera pas à obtenir des performances en terme d'usure aussi élevée que pour des pneumatiques de vélo de route par exemple ou de Cross-Country.

La demanderesse a découvert de façon surprenante que l'association au sein d'une composition de caoutchouc à base d'au moins un SBR de Tg élevée, d'un plastifiant et de charge renforçante avec des taux très important permettait d'améliorer de façon très notable les performances d'adhérence de pneumatiques dont la bande de roulement possède une telle composition, tout en conservant une usure semblable à celle connue pour des pneumatiques pour vélocipèdes bien que la fraction massique d'élastomère présente dans la composition soit très faible.

L'invention a donc pour objet un pneumatique pour vélocipède comportant au moins une composition de caoutchouc à base d'au moins un copolymère de butadiène-styrène, SBR, ayant une Tg supérieure ou égale à -65°C, avec un taux supérieur ou égal à 50 parties pour cent parties d'élastomère, pce, une charge renforçante avec un taux supérieur à 100 pce comprenant au moins du noir de carbone, un système plastifiant avec un taux supérieur à 100 pce, caractérisé en ce que le taux de plastifiant est supérieur au taux de charge renforçante et en ce que la fraction massique d'élastomère dans la composition est inférieure ou égale à 33%, préférentiellement inférieure ou égale à 31%.

Avantageusement le SBR est présent dans la composition avec un taux supérieur ou égal à 60 pce, de préférence supérieur ou égal à 80 pce.

Selon une variante de réalisation de l'invention le SBR est le seul élastomère de la composition.

Selon une autre variante de réalisation de l'invention, le SBR est utilisé en coupage avec au moins un deuxième élastomère, de préférence avec un élastomère diénique et préférentiellement choisi parmi dans le groupe constitué par les polybutadiènes, les polyisoprènes synthétiques, le caoutchouc naturel, les copolymères de butadiène, les copolymères d'isoprène et les mélanges de ces élastomères.

Selon un mode de réalisation préférentiel, le deuxième élastomère est un caoutchouc naturel dont le taux est inférieur ou égal à 40 pce.

Avantageusement, le SBR a une Tg supérieure ou égale à -50°C.

L'invention concerne encore un pneumatique pour vélocipède dans lequel la composition détaillée précédemment constitue la bande de roulement du pneumatique.

### I. MESURES ET TESTS UTILISES

### Dureté Shore

La dureté Shore A des compositions après cuisson est mesurée conformément à la norme ASTM D 2240-86.

### Contrainte rupture

Ces essais de traction permettent de déterminer les contraintes d'élasticité et les propriétés à la rupture. Les contraintes à la rupture (en MPa) et les allongements à la rupture (en %) sont également mesurés. Toutes ces mesures de traction sont effectuées à la température de 23°C ± 2°C, et dans les conditions normales d'hygrométrie (50 ± 5% d'humidité relative), selon la norme française NF T 40-101 (décembre 1979).

### Description des tests de confort/endurance et usure

On fait rouler les pneumatiques montés sur un vélo déterminé gonflés à une pression de 2 bars sur un terrain en plein air destiné à la pratique de l'enduro d'une longueur de 4 km.

Trois vélos sont équipés des pneumatiques témoins neufs et effectuent le parcours (donc avec trois pilotes différents), puis chaque pilote effectue le même parcours avec un vélo identique équipé des pneumatiques à tester neufs. Le test se termine par un nouveau passage de chaque pilote avec le vélo équipé des pneumatiques témoins afin de consolider le comparatif. Chacun des trois pilotes des vélos donnent un indice 100 en adhérence et en confort pour les pneumatiques témoins (valeur moyenne des deux passages qu'il a effectués), une valeur supérieure à 100 pour chaque propriété indique une meilleure performance.
Les indices obtenus sont des indices moyens des données appréciées par chacun des pilotes.

Pour les tests d'usure, les mêmes pneumatiques témoins et à étudier sont testés sur des parcours en plein air avec une distance cumulée de 200 km sur une période de 4 à 5 jours situés dans une plage d'un mois. Dans ce même mois, on effectue deux roulages avec des vélos équipés des pneumatiques témoins neufs et 2 roulages avec des vélos équipés des pneumatiques à tester neufs pour chaque type de pneumatique à tester.. A l'issue des 200km de roulage, on effectue un contrôle visuel de l'état d'usure des pneumatiques (moyenné sur les deux roulages réalisés pour chaque type de pneumatique) et on compare l'état d'usure des pneumatiques témoins à celui des pneumatiques à tester. On attribue arbitrairement un indice de 100 aux pneumatiques témoins ayant parcourus les200km, et une comparaison avec l'état d'usure des pneumatiques à tester permet d'attribuer un indice aux autres pneumatiques.
Un indice supérieur à 100 indique que les pneumatiques sont moins usés que les pneumatiques témoins.

### II. DESCRIPTION DETAILLEE DE L'INVENTION

Le pneumatique pour vélocipède selon l'invention comporte au moins une composition de caoutchouc à base d'au moins un copolymère de butadiène-styrène, SBR, ayant une Tg supérieure ou égale à -65°C, avec un taux supérieur ou égal à 50 parties pour cent parties d'élastomère, pce, une charge renforçante avec un taux supérieur à 100 pce comprenant au moins du noir de carbone, un système plastifiant avec un taux supérieur à 100 pce, caractérisé en ce que la fraction massique d'élastomère dans la composition est inférieure ou égale à 33%.

De telles compositions de l'invention peuvent être destinées à constituer, dans les pneumatiques pour vélocipèdes, la bande de roulement, les mélanges des nappes d'armature de carcasse, les flancs, etc.

Sauf indication expresse différente, les pourcentages indiqués dans la présente demande sont des % en masse.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### Elastomère diénique

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

La matrice élastomérique de la composition conforme à l'invention comprend au moins :
- un SBR ayant une Tg (Tg, mesurée selon ASTM D3418) supérieure ou égale à - 65°C, avec un taux supérieur ou égal à 50 pce, de préférence supérieur ou égal à 60 pce, encore plus préférentiellement supérieur ou égal à 80 pce. De façon encore plus préférentielle, le SBR a une Tg supérieure ou égale à -50°C.

Selon un mode de réalisation de l'invention, le SBR est le seul élastomère diénique de la composition.

Selon un autre mode de réalisation avantageux, le SBR est utilisé en en coupage avec au moins un deuxième élastomère diénique, préférentiellement choisi parmi le groupe constitué par les polybutadiènes, les polyisoprènes synthétiques, le caoutchouc naturel, les copolymères de butadiène, les copolymères d'isoprène et les mélanges de ces élastomères.

Plus préférentiellement le deuxième élastomère est constitué par du polybutadiène, BR ou par du caoutchouc naturel, dans ce deuxième cas le taux du deuxième élastomère étant préférentiellement inférieur ou égal à 40 pce.

Les élastomères précités peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752).
On peut aussi citer comme élastomères fonctionnels ceux préparés par l'utilisation d'un amorceur fonctionnel, notamment ceux portant une fonction amine ou étain (voir par exemple WO 2010072761).
Comme autres exemples d'élastomères fonctionnalisés, on peut citer également des élastomères (tels que SBR, BR, NR ou IR) du type époxydés.

On notera que le SBR peut être préparé en émulsion ("ESBR") ou en solution ("SSBR »). Qu'il s'agisse de ESBR ou de SSBR, on utilise notamment un SBR ayant une teneur en styrène moyenne, par exemple comprise entre 10% et 35% en poids, ou une teneur en styrène élevée, par exemple de 35 à 55%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 65°C, de préférence supérieure ou égale à -50°C.

A titre de BR, conviennent les BR présentant un taux (% molaire) d'enchaînements cis-1,4 supérieur à 90%.

La composition selon l'invention peut contenir un autre élastomère diénique. Les élastomères diéniques de la composition pouvant être utilisés en association avec tout type d'élastomère synthétique autre que diénique, voire avec des polymères autres que des élastomères, par exemple des polymères thermoplastiques.

### Charge renforçante, agent de couplage et agent de recouvrement

La composition de l'invention comporte tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, comme par exemple les noirs N115, N134, N234, N326, N330, N339, N347, N375). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). A titre de noir de carbone, conviennent également les noirs de carbone partiellement ou intégralement recouverts de silice par un post traitement, ou les noirs de carbone modifiés in situ par de la silice tels que, à titre non limitatif, les charges qui commercialisées par la société Cabot Corporation sous la dénomination EcoblackTM « CRX 2000 » ou « CRX4000 ».

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants, par exemple décrits dans US 6 610 261 et US 6 747 087.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Pour les compositions conformes à l'invention, le taux de charge renforçante totale (noir de carbone et/ou charge inorganique renforçante telle que silice etc.) est de préférence supérieur ou égal à 100 et inférieur ou égal à 180 pce, de préférence inférieur ou égal à 140.

Selon un mode de réalisation de l'invention, la composition comprend uniquement du noir de carbone à titre de charge renforçante.

Selon un autre mode de réalisation de l'invention, la composition comprend outre le noir de carbone, une charge renforçante inorganique telle que la silice, de préférence le noir de carbone est la charge majoritaire.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

Les compositions de caoutchouc peuvent également contenir des activateurs de couplage lorsque qu'un agent de couplage est utilisé, des agents de recouvrement de la charge inorganique lorsqu'une charge inorganique est utilisée, ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru. Ces agents de recouvrement sont bien connus (voir par exemple les demandes de brevet WO 2006/125533, WO 2007/017060 et WO 2007/003408), on citera par exemple des hydroxysilanes ou des silanes hydrolysables tels que des hydroxysilanes (voir par exemple WO 2009/062733) des alkylalkoxysilanes, notamment des alkyltriéthoxysilanes comme par exemple le 1-octyl-tri-éthoxysilane, des polyols (par exemple diols ou triols), des polyéthers (par exemple des polyéthylène-glycols), des amines primaires, secondaires ou tertiaires (par exemple des trialcanol-amines), des polyorgano-siloxanes hydroxylés ou hydrolysables (par exemple des α,ω-dihydroxy-poly-organosilanes (notamment des α,ω-dihydroxy-polydiméthylsiloxanes) (voir par exemple EP 0 784 072), des acides gras comme par exemple l'acide stéarique.

### Système plastifiant

Les compositions de caoutchouc de l'invention utilisent un système plastifiant qui peut être constitué notamment d'une huile plastifiante et/ ou d'une résine plastifiante.

Ainsi ces compositions comprennent une huile d'extension (ou huile plastifiante) dont la fonction habituelle est de faciliter la mise en oeuvre, par un abaissement de la plasticité Mooney.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofurane à une concentration d'environ 1 g/l ; puis la solution est filtrée sur filtre de porosité 0,45 µm avant injection. L'appareillage est la chaîne chromatographique « WATERS alliance ». Le solvant d'élution est le tétrahydrofurane, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

Les compositions de caoutchouc de l'invention peuvent également utiliser une résine plastifiante hydrocarbonée dont la Tg, température de transition vitreuse, est supérieure à 20°C et dont la température de ramollissement (en anglais « softening point ») est inférieure à 170°C, comme expliqué en détail ci-après.

De manière connue de l'homme du métier, la dénomination "résine plastifiante" est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé, typiquement supérieur à 5 pce) avec la composition de caoutchouc à laquelle il est destiné, de manière à agir comme un véritable agent diluant.

Les résines hydrocarbonées sont des polymères bien connus de l'homme du métier, miscibles donc par nature dans les compositions d'élastomère(s) lorsqu'elles sont qualifiées en outre de "plastifiantes".

Elles ont été largement décrites dans les brevets ou demandes de brevet cités en introduction du présent mémoire, ainsi que par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods").

Elles peuvent être aliphatiques, naphténiques, aromatiques ou encore du type aliphatique/ naphténique/ aromatique c'est-à-dire à base de monomères aliphatiques et/ou naphténiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine plastifiante hydrocarbonée présente au moins une, encore plus préférentiellement l'ensemble, des caractéristiques suivantes :
- une Tg supérieure à 30°C ;
- une masse Mn comprise entre 500 et 1500 g/mol ;
- un indice Ip inférieur à 2.

La température de transition vitreuse Tg est mesurée de manière connue par DSC (Differential Scanning Calorimetry), selon la norme ASTM D3418 (1999), et la température de ramollissement (« softening point ») est mesurée selon la norme ASTM E-28.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

Parmi les résines de copolymères ci-dessus sont préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre.

A titre de monomère vinylaromatique conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le composé vinyle-aromatique est du styrène ou un monomère vinylaromatique issu d'une coupe C9 (ou plus généralement d'une coupe C8 à C10). De préférence, le composé vinylaromatique est le monomère minoritaire, exprimé en fraction molaire, dans le copolymère considéré.

Selon un mode de réalisation plus particulièrement préférentiel, la résine plastifiante hydrocarbonée est choisie dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Les résines préférentielles ci-dessus sont bien connues de l'homme du métier et disponibles commercialement, par exemple vendues en ce qui concerne les :
résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
résines de copolymère coupe C5/ vinylaromatique, notamment coupe C5/ styrène ou coupe C5/ coupe C9 : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "ECR 373" ;
résines de copolymère limonène/ styrène : par DRT sous dénomination "Dercolyte TS 105" de la société DRT, par ARIZONA Chemical Company sous dénominations "ZT115LT" et "ZT5100".

Le taux de système plastifiant est supérieur ou égal à 100 pce, et préférentiellement inférieur ou égal à 180 pce, et encore plus préférentiellement compris entre 110 et 160 pce. En dessous du minimum indiqué, l'effet technique visé peut s'avérer insuffisant, alors qu'au-delà du maximum le pouvoir collant des compositions à l'état cru, sur les outils de mélangeage, peut dans certains cas devenir rédhibitoire du point de vue industriel.

Selon un mode de réalisation le système plastifiant est constitué majoritairement, voire même uniquement d'huile plastifiante.

Selon un autre mode de réalisation le système plastifiant comprend majoritairement de l'huile plastifiante et également une résine plastifiante, avec un taux compris préférentiellement entre 15 et 80 pce, plus préférentiellement inférieur ou égal à 60 pce.

### Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 1 et 8 pce, en particulier entre 1 et 6 pce lorsque la composition de l'invention est destinée, selon un mode préférentiel de l'invention, à constituer une "gomme" (ou composition de caoutchouc) interne d'un pneumatique. L'accélérateur primaire de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs primaires sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés.

### Autres constituants

Les matrices de caoutchouc des composites conformes à l'invention comportent également tout ou partie des additifs habituellement utilisés dans les compositions de caoutchouc destinées à la fabrication de systèmes de liaison au sol des véhicules automobiles, en particulier de pneumatiques, tels que par exemple des agents anti-vieillissement, des antioxydants, des plastifiants ou des huiles d'extension que ces derniers soient de nature aromatique ou non-aromatique, notamment des huiles très faiblement ou non aromatiques (e.g., huiles naphténiques ou paraffiniques, huiles MES ou TDAE), des agents facilitant la mise en oeuvre des compositions à l'état cru, un système de réticulation à base soit de soufre, soit de donneurs de soufre et/ou de peroxyde, des accélérateurs, des activateurs ou retardateurs de vulcanisation, des agents antiréversion tels que par exemple l'hexathiosulfonate de sodium ou le N,N'-m-phénylène-biscitraconimide, des accepteurs et donneurs de méthylène (par exemple résorcinol, HMT ou H3M) ou autres résines renforçantes, bismaléimides, d'autres systèmes promoteurs d'adhésion vis-à-vis de renforts métalliques notamment laitonnés, comme par exemple ceux du type "RFS" (résorcinol-formaldéhyde-silice) voire encore d'autres sels métalliques comme par exemple des sels organiques de cobalt ou de nickel. L'homme du métier saura ajuster la formulation de la composition en fonction de ses besoins particuliers.

### Préparation des compositions de caoutchouc

Les compositions sont fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, phase de finition au cours de laquelle est incorporé le système de réticulation.

A titre d'exemple, la phase non-productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement du mélange ainsi obtenu, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min). L'homme du métier sait ajuster ce temps en fonction du collant des mélanges réalisés.

La composition finale ainsi obtenue peut ensuite être calandrée, par exemple sous la forme d'une feuille, d'une plaque ou encore extrudée, par exemple pour former un profilé de caoutchouc utilisé pour la fabrication d'un composite ou d'un produit semi-fini, tel que par exemple des nappes, bandes, sous-couches, autres blocs de caoutchouc renforcés de renforts, destinés à former par exemple une partie de la structure d'un pneumatique.

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

On notera que l'invention concerne les compositions de caoutchouc précédemment décrites tant à l'état dit "cru" (i.e. avant cuisson) qu'à l'état dit "cuit" ou vulcanisé (i.e. après vulcanisation).

### III- EXEMPLES DE REALISATION DE L'INVENTION

Les exemples qui suivent permettent d'illustrer l'invention, cette dernière ne saurait cependant être limitée à ces seuls exemples.

### III- 1 Préparation des compositions de caoutchouc

On procède pour les essais qui suivent de la manière suivante: on introduit dans un mélangeur interne, rempli à 70% et dont la température initiale de cuve est d'environ 60°C, l'élastomère diénique (ici ESBR), la charge renforçante (noir de carbone) puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 140°C. On récupère le mélange ainsi obtenu, on le refroidit puis on ajoute le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III- 2 Essai 1

Cet essai a pour but de montrer l'amélioration importante des propriétés de déformation à la rupture des compositions conformes à l'invention par rapport à un témoin correspondant aux compositions classiquement utilisées pour des pneumatiques de VTT destinés à l'enduro et à six autres compositions non conformes à l'invention.

On prépare pour cela huit compositions à base d'un ESBR renforcées par du noir de carbone conformément au procédé décrit au paragraphe III-1.

Ces six compositions diffèrent les unes des autres par le taux de noir de carbone et le taux de plastifiant utilisés :
- la composition témoin C1 utilisée classiquement pour les pneumatiques de VTT destinés à la pratique de l'enduro comprend un taux de plastifiant et de noir de carbone identique (80 pce),
- la composition C2 non conforme à l'invention comprend un taux identique de plastifiant et de noir de carbone (90 pce),
- la composition C3 non conforme à l'invention comprend un taux identique de plastifiant et de noir de carbone (100pce),
- la composition C4 non conforme à l'invention comprend un taux identique de plastifiant et de noir de carbone (120 pce),
- la composition C5 non conforme à l'invention comprend un taux de noir de carbone supérieur à celui de plastifiant (respectivement 120 et 100 pce),
- la composition C6 conforme à l'invention comprend un taux de noir de carbone inférieur à celui de plastifiant (respectivement 100 et 120 pce),
- la composition C7 non conforme à l'invention comprend un taux identique de plastifiant et de noir de carbone (150 pce),
- la composition C8 conforme à l'invention comprend un taux de noir de carbone inférieur à celui de plastifiant (respectivement 130 et 150 pce)

Les tableaux 1 et 2 donnent respectivement la formulation des différentes compositions (tableau 1- taux des différents produits exprimés en pce) et les propriétés *après cuisson* (environ 20 min à 150°C).

L'examen du tableau 2 montre de façon surprenante que la propriété de déformation à la rupture des compositions conformes à l'invention C6 et C8 est nettement améliorée vis-à-vis de toutes les compositions y compris de la composition C7 incluant 150 pce de plastifiant.

On constate également que les compositions conformes à l'invention C6 et C8 présentent une dureté shore très basse par rapport à toutes les autres compositions.

Il apparaît donc clairement que l'association de taux élevés de charge et de plastifiants avec un positionnement relatif de ces taux l'un vis-à-vis de l'autre, permet de façon surprenante d'améliorer la déformation à la rupture, ce qui a pour conséquence sur le pneumatique incluant une telle composition en bande de roulement, d'améliorer son adhérence.

### III- 2 Essai 2

Le but de cet essai est de démontrer que contrairement à ce qui est attendu de l'homme du métier, des pneumatiques pour vélos tout terrain destinés à la pratique de l'enduro, incluant en bande de roulement des compositions conformes à l'invention ont non seulement des propriétés améliorées de confort/endurance mais gardent des propriétés d'usure comparables à celle des pneumatiques classiquement utilisés pour ces mêmes vélos.
Des pneumatiques pour VVT destiné à la pratique de l'enduro ont été réalisés avec bandes de roulement incluant les compositions C1, C6 et C8 décrites dans l'essai 1.

Ces pneumatiques ont subi les tests de confort/endurance et usure décrit précédemment. Les résultats de ces tests sont présentés dans le tableau 3.

On constate que les pneumatiques dont les bandes de roulement comportent les compositions conformes à l'invention C6 et C8, présentent une très nette amélioration à la fois en adhérence et en confort, sans pour autant qu'il y ait une dégradation de la performance en usure en comparaison des pneumatiques témoins. Ce résultat est d'autant plus étonnant que les résultats de l'essai 1, montraient que les compositions C6 et C8 avaient une dureté shore très basse, ce qui aurait pu être nuisible pour les propriétés d'usure.

Ainsi des pneumatiques pour VTT comportant des compositions conformes à l'invention associant des taux élevés de charge et de plastifiants avec un positionnement relatif de ces taux l'un vis-à-vis de l'autre, permet de façon surprenante d'améliorer à la fois les propriétés de comportement et d'adhérence sans dégrader les propriétés d'usure de ces pneumatiques.

**Tableau 1**

| **Composition N°** | **C1** | **C2** | **C3** | **C4** | **C5** | **C6** | **C7** | **C8** |
|---|---|---|---|---|---|---|---|---|
| ESBR (1) | 137,5 | 137,5 | 137,5 | 137,5 | 137,5 | 137,5 | 137,5 | 137,5 |
| Noir de carbone (2) | 80 | 90 | 100 | 120 | 120 | 100 | 150 | 130 |
| Huile MES (3) | 17,5 | 27,5 | 37,5 | 57,5 | 37,5 | 57,5 | 57,5 | 57,5 |
| Résine (4) | 25 | 25 | 25 | 25 | 25 | 25 | 55 | 55 |
| Cire ozone | 5,5 | 5,5 | 5,5 | 5,5 | 5,5 | 5,5 | 5,5 | 5,5 |
| Anti-oxydant (5) | 2 | 2 | 2 | 2 | 2 | 2 | 2 | 2 |
| ZnO (6) | 3 | 3 | 3 | 3 | 3 | 3 | 3 | 3 |
| Acide stéarique (7) | 2 | 2 | 2 | 2 | 2 | 2 | 2 | 2 |
| Soufre | 3 | 3 | 3 | 3 | 3 | 3 | 3 | 3 |
| Accélérateur (8) | 2 | 2 | 2 | 2 | 2 | 2 | 2 | 2 |

| | | | | | | | | |
|---|---|---|---|---|---|---|---|---|
| (1) ESBR : 40% styrène_16%vinyl ; 70% trans ; 14% cis ; Tg s -30°C_(huile d'extension 37,5 pce TDAE) (2) Noir de carbone N234 commercialisé par la société Cabot Corporation (3) Huile MES « Catenex SNR » de la société Shell (4) résine coupe C5/ coupe C9 commercialisée par la société Cray Valley sous la dénomination « Resine THER 8644 » (Tg= 44°C) (5) N-1,3-diméthylbutyl-N-phényl-para-phénylènediamine commercialisée par la société Flexsys sous la dénomination "Santoflex 6-PPD" (6) oxyde de zinc (grade industriel - commercialisé par la société Umicore) (7) stéarine commercialisée par la société Uniqema sous la dénomination "Pristerene 4931 " (8) N-cyclohexyl-2-benzothiazyl-sulfénamide commercialisée par la société Flexsys sous la dénomination "Santocure CBS" | | | | | | | | |

**Tableau 2**

| **Composition N°** | **C1** | **C2** | **C3** | **C4** | **C5** | **C6** | **C7** | **C8** |
|---|---|---|---|---|---|---|---|---|
| Dureté Shore | 55 | 56 | 56 | 64 | 56 | 48 | 58 | 46 |
| Déformation rupture | 435 | 453 | 499 | 379 | 490 | 522 | 427 | 538 |

**Tableau 3**

| **Composition utilisée en bande de roulement** | **C1** | **C6** | **C8** |
|---|---|---|---|
| Adhérence | 100 | 140 | 150 |
| Confort | 100 | 130 | 140 |
| Usure | 100 | 100 | 100 |

## Revendications

1. Pneumatique pour vélocipède comportant au moins une composition de caoutchouc à base d'au moins un copolymère de butadiène-styrène, SBR, ayant une Tg supérieure ou égale à -65°C, avec un taux supérieur ou égal à 50 parties pour cent parties d'élastomère, pce, une charge renforçante avec un taux supérieur à 100 pce comprenant au moins du noir de carbone, un système plastifiant avec un taux supérieur à 100 pce, **caractérisé en ce que** le taux de plastifiant est supérieur au taux de charge renforçante et **en ce que** la fraction massique d'élastomère dans la composition est inférieure ou égale à 33%, de préférence inférieure ou égale à 31%.

2. Pneumatique selon la revendication 1, dans lequel le SBR est présent dans la composition avec un taux supérieur ou égal à 60 pce, de préférence avec un taux supérieur ou égal à 80 pce.

3. Pneumatique selon l'une quelconque des revendications précédentes, dans lequel le SBR est le seul élastomère de la composition.

4. Pneumatique selon l'une quelconque des revendications 1 à 2, dans lequel le SBR est utilisé en coupage avec au moins un deuxième élastomère.

5. Pneumatique selon la revendication 4, dans lequel le deuxième élastomère est un élastomère diénique et est choisi parmi dans le groupe constitué par les polybutadiènes, les polyisoprènes synthétiques, le caoutchouc naturel, les copolymères de butadiène, les copolymères d'isoprène et les mélanges de ces élastomères.

6. Pneumatique selon la revendication 5, dans lequel le deuxième élastomère est constitué par du polybutadiène, BR.

7. Pneumatique selon la revendication 5, dans lequel le deuxième élastomère est constitué par du caoutchouc naturel.

8. Pneumatique selon la revendication 7, dans lequel le taux de caoutchouc naturel est inférieur ou égal à 40 pce.

9. Pneumatique selon l'une quelconque des revendications précédentes, dans lequel le SBR a une Tg supérieure ou égale à -50°C.

10. Pneumatique selon l'une quelconque des revendications précédentes, dans lequel le taux de charge renforçante est inférieur ou égal à 140 pce.

11. Pneumatique selon l'une quelconque des revendications 1 à 10, dans lequel la charge renforçante comprend un coupage de noir de carbone et de charge inorganique, le noir de carbone étant majoritaire.

12. Pneumatique selon l'une quelconque des revendications 1 à 10, dans lequel la charge renforçante comprend un coupage de noir de carbone et de charge inorganique, la charge inorganique étant constituée par de la silice.

13. Pneumatique selon l'une quelconque des revendications précédentes, dans lequel le taux du système plastifiant est inférieur ou égal à 180 pce, de préférence le taux du système plastifiant est compris entre 110 et 160 pce.

14. Pneumatique selon l'une quelconque des revendications précédentes, dans lequel le système plastifiant comprend au moins une résine plastifiante, de préférence lequel le système plastifiant comprend au moins une résine plastifiante dont le taux est compris entre 15 et 80 pce.

15. Pneumatique selon l'une quelconque des revendications 1 à 14, dans lequel la composition constitue la bande de roulement du pneumatique.

## Patentansprüche

1. Fahrradreifen, aufweisend mindestens eine Kautschukzusammensetzung auf Basis von mindestens einem Styrol-Butadien-Copolymer, SBR, mit einer Tg von höher als oder gleich -65°C mit einem Anteil von größer gleich 50 Teilen auf einhundert Elastomerteile, phr, einen Verstärkungsfüllstoff mit einem Anteil von größer gleich 100 phr, der mindestens einen Ruß umfasst, ein Weichmachersystem mit einem Anteil von größer gleich 100 phr, **dadurch gekennzeichnet, dass** der Weichmacheranteil höher ist als der Anteil des Verstärkungsfüllstoffs, und dadurch, dass der Massenanteil von Elastomer in der Zusammensetzung kleiner gleich 33%, vorzugsweise kleiner gleich 31% ist.

2. Reifen nach Anspruch 1, wobei das SBR in der Zusammensetzung mit einem Anteil von größer gleich 60 phr, vorzugsweise mit einem Anteil von größer gleich 80 phr vorliegt.

3. Reifen nach einem der vorhergehenden Ansprüche, wobei das SBR das einzige Elastomer der Zusammensetzung ist.

4. Reifen nach Anspruch 1 oder 2, wobei das SBR gemischt mit mindestens einem zweiten Elastomer verwendet wird.

5. Reifen nach Anspruch 4, wobei das zweite Elastomer ein Dienelastomer ist und aus der Gruppe ausgewählt ist bestehend aus Polybutadienen, synthetischen Polyisoprenen, Naturkautschuk, Butadien-Copolymeren, Isopren-Copolymeren und Mischungen aus diesen Elastomeren.

6. Reifen nach Anspruch 5, wobei das zweite Elastomer aus Polybutadien, BR, gebildet ist.

7. Reifen nach Anspruch 5, wobei das zweite Elastomer aus Naturkautschuk gebildet ist.

8. Reifen nach Anspruch 7, wobei der Anteil von Naturkautschuk kleiner gleich 40 phr beträgt.

9. Reifen nach einem der vorhergehenden Ansprüche, wobei das SBR eine Tg von höher als oder gleich -50°C aufweist.

10. Reifen nach einem der vorhergehenden Ansprüche, wobei der Anteil des Verstärkungsfüllstoffs kleiner gleich 140 phr beträgt.

11. Reifen nach einem der Ansprüche 1 bis 10, wobei der Verstärkungsfüllstoff eine Mischung aus Ruß und einem anorganischen Füllstoff umfasst, wobei der Ruß die Mehrheit ausmacht.

12. Reifen nach einem der Ansprüche 1 bis 10, wobei der Verstärkungsfüllstoff eine Mischung aus Ruß und anorganischem Füllstoff umfasst, wobei der anorganische Füllstoff aus Siliciumdioxid gebildet ist.

13. Reifen nach einem der vorhergehenden Ansprüche, wobei der Anteil des Weichmachersystems kleiner gleich 180 phr beträgt, wobei vorzugsweise der Anteil des Weichmachersystems zwischen 110 und 160 phr beträgt.

14. Reifen nach einem der vorhergehenden Ansprüche, wobei das Weichmachersystem mindestens ein Weichmacherharz umfasst, das Weichmachersystem vorzugsweise mindestens ein Weichmacherharz umfasst, dessen Anteil zwischen 15 und 80 phr liegt.

15. Reifen nach einem der Ansprüche 1 bis 14, wobei die Zusammensetzung die Lauffläche des Reifens bildet.

## Claims

1. Bicycle tyre comprising at least one rubber composition based on at least one styrene/butadiene copolymer, SBR, having a Tg of greater than or equal to -65°C, at a content of greater than or equal to 50 parts per hundred parts of elastomer, phr, a reinforcing filler at a content of greater than 100 phr comprising at least carbon black, and a plasticizing system at a content of greater than 100 phr, **characterized in that** the content of plasticizer is greater than the content of reinforcing filler and **in that** the weight fraction of elastomer in the composition is less than or equal to 33%, preferably less than or equal to 31%.

2. Tyre according to Claim 1, in which the SBR is present in the composition at a content of greater than or equal to 60 phr, preferably at a content of greater than or equal to 80 phr.

3. Tyre according to any one of the preceding claims, in which the SBR is the only elastomer of the composition.

4. Tyre according to any one of Claims 1 to 2, in which the SBR is used in a blend with at least one second elastomer.

5. Tyre according to Claim 4, in which the second elastomer is a diene elastomer and is selected from the group consisting of polybutadienes, synthetic polyisoprenes, natural rubber, butadiene copolymers, isoprene copolymers and the mixtures of these elastomers.

6. Tyre according to Claim 5, in which the second elastomer consists of polybutadiene, BR.

7. Tyre according to Claim 5, in which the second elastomer consists of natural rubber.

8. Tyre according to Claim 7, in which the content of natural rubber is less than or equal to 40 phr.

9. Tyre according to any one of the preceding claims, in which the SBR has a Tg of greater than or equal to -50°C.

10. Tyre according to any one of the preceding claims, in which the content of reinforcing filler is less than or equal to 140 phr.

11. Tyre according to any one of Claims 1 to 10, in which the reinforcing filler comprises a blend of carbon black and of inorganic filler, the carbon black being predominant.

12. Tyre according to any one of Claims 1 to 10, in which the reinforcing filler comprises a blend of carbon black and of inorganic filler, the inorganic filler consisting of silica.

13. Tyre according to any one of the preceding claims, in which the content of plasticizing system is less than or equal to 180 phr, preferably the content of plasticizing system is between 110 and 160 phr.

14. Tyre according to any one of the preceding claims, in which the plasticizing system comprises at least one plasticizing resin, preferably the plasticizing system comprises at least one plasticizing resin in which the content of plasticizing resin is between 15 and 80 phr.

15. Tyre according to any one of Claims 1 to 14, in which the composition constitutes the tread of the tyre.
